(19) Europäisches Patentamt
European Patent Office
Office européen des brevets

(11) **EP 1 502 189 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **03730161.1**

(22) Anmeldetag: **21.03.2003**

(51) Int Cl.:
**G06F 11/34** (2006.01)

(86) Internationale Anmeldenummer:
**PCT/EP2003/050076**

(87) Internationale Veröffentlichungsnummer:
**WO 2003/096193 (20.11.2003 Gazette 2003/47)**

(54) **VERFAHREN ZUR ERMITTLUNG DER PRIORITÄTSABHANGIGEN RECHENZEITVERTEILUNG IN EINEM PRIORIT TSGESTEUERTEN MEHRPROZESS-RECHENYSYSTEM**

METHOD FOR DETERMINING PRIORITY-DEPENDENT COMPUTER TIME DISTRIBUTION IN A PRIORITY-CONTROLLED MULTIPROCESS COMPUTING SYSTEM

PROCEDE POUR DETERMINER LA REPARTITION DU TEMPS DE CALCUL EN FONCTION DE LA PRIORITE DANS UN SYSTEME DE CALCUL MULTIPROCESSUS COMMANDE PAR PRIORITE

(84) Benannte Vertragsstaaten:
**DE FR GB IT**

(30) Priorität: **07.05.2002 DE 10220341**

(43) Veröffentlichungstag der Anmeldung:
**02.02.2005 Patentblatt 2005/05**

(73) Patentinhaber: **SIEMENS AKTIENGESELLSCHAFT 80333 München (DE)**

(72) Erfinder:
• **FISCHER, Gerhard 93142 Maxhütte-Degldorf (DE)**
• **HURICH, Martin 71739 Oberriexingen (DE)**
• **NEUMAYER, Josef 93356 Teugn (DE)**
• **SIBERIL, Thierry 93047 Regensburg (DE)**
• **ZAHN, Christian 85221 Dachau (DE)**
• **ZIEGLER, Herbert 94369 Rain (DE)**

(56) Entgegenhaltungen:
**EP-A- 1 035 474**

• **CROWE D R: "NOVATEL'S NOVEL APPROACH TO CPU USAGE MEASUREMENT" SOFTWARE PRACTICE & EXPERIENCE, JOHN WILEY & SONS LTD. CHICHESTER, GB, Bd. 21, Nr. 5, 1. Mai 1991 (1991-05-01), Seiten 465-477, XP000297179 ISSN: 0038-0644**
• **PAUL K. HARTER, JR: "Response Times in Level Structured Systems" ACM TRANSACTIONS ON COMPUTER SYSTEMS, Bd. 5, Nr. 3, August 1987 (1987-08), Seiten 232-248, XP002262480**

## Beschreibung

Die Erfindung betrifft ein Verfahren zur Ermittlung der prioritätsabhängigen Rechenzeitverteilung in einem prioritätsgesteuerten Mehrprozess-Rechensystem gemäß Anspruch 1.

**D1 EP-A-1035474** offenbart ein Verfahren zur Zählung der Anzahl Ausführungen eines Messprozesses während eines Messzeitintervalls, um den Leerlaufzustand eines Prozessors zu ermitteln, in dem die Priorität des Messprozesses höher als ein Leerlauf-Prozess und geringerer als durch das Prozessor zu verarbeitende Nutzprozesse ist. Die Priorität des Messprozesses in D1 wird jedoch nicht verändert, um eine prioritätsabhängigen Rechenzeitverteilung zu ermitteln.

In Mehrprozess-Rechensystemen können mehrere Prozesse mit unterschiedlichen Funktionen verwaltet werden, die für den Benutzer scheinbar gleichzeitig ablaufen. Den einzelnen Prozessen ist hierbei jeweils eine Priorität zugeordnet, welche die Zuteilung der verfügbaren Rechenzeit durch eine Prozessverwaltung bestimmt. Die Rechenzeitverteilung durch die Prozessverwaltung erfolgt hierbei nach sogenannten Scheduling-Verfahren, wobei in Abhängigkeit von den Bedürfnissen und den Randbedingungen beispielsweise preemptive oder nicht-preemptive Scheduling-Verfahren sowie statische oder dynamische Scheduling-Verfahren verwendet werden können. Bei einer nicht-preemptiven Prozessverwaltung wird beispielsweise jeweils nach Beendigung eines Prozesses der Prozess mit der höchsten Priorität gestartet.

Bei derartigen MehrProzess-Rechensystemen ist es wünschenswert, die prioritätsabhängige Rechenzeitverteilung zu bestimmen.

Dies ist zum einen wichtig, um zu ermitteln, wieviel Rechenzeit ein Prozess mit einer vorgegebenen Priorität verbraucht. Falls beispielsweise zahlreiche Prozesse mit einer hohen Priorität verwaltet werden, so erhält ein Prozess mit einer niedrigen Priorität nur relativ wenig Rechenzeit. Die für einen Prozess mit einer vorgegebenen Priorität verfügbare Rechenzeit variiert also während des Betriebs eines MehrProzess-Rechensystems in Abhängigkeit von den Prioritäten der anderen Prozesse.

Zum anderen ist die prioritätsabhängige Bestimmung der Rechenzeitverteilung wünschenswert, um zu ermitteln, wieviel Rechenzeit von Prozessen mit Prioritäten oberhalb einer vorgegebenen Prioritätsschwelle verbraucht wird.

Zur Bestimmung der Rechenzeitverteilung ist es bekannt, Hintergrundprozesse mit einer vorgegebenen Priorität und einer bekannten Rechenzeit zu betrachten, die in MehrProzess-Rechensystemen laufend wiederholt werden, wie beispielsweise eine System-Warteschleife (engl.: Idle Loop). Hierbei wird während eines Messzeitraums die Anzahl der Wiederholungen des Hintergrundprozesses gemessen. Aus der bekannten Rechenzeit des Hintergrundprozesses und der Anzahl der Wiederholungen des Hintergrundprozesses während des Messzeitraums kann dann die von dem Hintergrund-Prozess während des Messzeitraums insgesamt verbrauchte Rechenzeit bestimmt werden. Daraus ergibt sich dann die Rechenzeit, die von anderen Prozessen mit einer höheren Priorität während des Messzeitraums verbraucht wird.

Nachteilig an diesem bekannten Verfahren ist jedoch zum einen die Tatsache, dass es nur mit Hintergrundprozessen einsetzbar ist, die eine vorgegebene konstante Rechenzeit aufweisen und sich laufend wiederholen. Falls die zur Messung herangezogenen Hintergrundprozesse dagegen eine variable Rechenzeit benötigen, so führt dieses Verfahren zu Messfehlern, da die variable Rechenzeit nicht in die Messung eingeht.

Ein weiterer Nachteil dieses bekannten Verfahrens besteht darin, dass die Prioritätsschwelle durch die Priorität des zur Messung verwendeten Hintergrundprozesses festgelegt wird. Es kann also nur die Rechenzeit bestimmt werden, die von Prozessen mit einer größeren Priorität als dem HintergrundProzess verbraucht wird. Es ist mit diesem Verfahren jedoch nicht möglich, die Rechenzeit zu bestimmen, die von Prozessen oberhalb einer beliebigen Prioritätsschwelle verbraucht wird.

Weiterhin ist ein Verfahren zur Bestimmung der prioritätsabhängigen Rechenzeitverteilung bekannt, bei dem jeweils Beginn und Ende eines Prozesses mit einer bekannten Priorität erfasst werden. Dieses Verfahren bietet zum einen den Vorteil, dass die prioritätsabhängige Rechenzeitverteilung auch von solchen MehrProzess-Rechensystemen ermittelt werden kann, welche ausschließlich Prozesse mit variabler Rechenzeit aufweisen. Zum anderen kann mit diesem Verfahren die Rechenzeitverteilung gleichzeitig für verschiedene Prioritäten ermittelt werden, da die Messung nicht auf Hintergrundprozesse mit einer festgelegten Priorität beschränkt ist.

Nachteilig an diesem bekannten Verfahren ist jedoch der relativ große Verbrauch an Hardwareresourcen und Rechenzeit.

Der Erfindung liegt deshalb die Aufgabe zugrunde, das eingangs beschriebene bekannte Verfahren dahingehend zu verbessern, dass der Rechenzeitverbrauch von Prozessen oberhalb oder unterhalb einer beliebigen Prioritätsschwelle messbar ist, ohne dass Hintergrundprozesse mit einer konstanten Rechenzeit benötigt werden.

Die Aufgabe wird, ausgehend von dem eingangs beschriebenen bekannten Verfahren, durch die Merkmale des Anspruchs 1 gelöst.

Die Erfindung umfasst die allgemeine technische Lehre, zur Bestimmung der prioritätsabhängigen Rechenzeitverteilung in einem MehrProzess-Rechensystem einen separaten MessProzess mit einer vorgegebenen Priorität und einer vorgegebenen Rechenzeit zu verwenden.

Dies bietet zum einen den Vorteil, dass die Prioritätsschwelle bei der Bestimmung der prioritätsabhängigen Rechenzeitverteilung frei festgelegt werden kann, da die Priorität des Messprozesses frei wählbar ist.

Zum anderen ist das erfindungsgemäße Verfahren durch die Verwendung eines Messprozesses mit einer vorgegebenen Rechenzeit auch bei Prozessverwaltungsverfahren anwendbar, bei denen die Rechenzeit aller übrigen Prozesse variabel ist.

Die Erfindung sieht vor, dass der Messprozess während eines Messzeitraums wiederholt ausgeführt wird, wobei die Anzahl der Ausführungen des Messprozesses erfasst wird. Aus der vorgegebenen Rechenzeit des Messprozesses und der Anzahl der Ausführungen während des Messzeitraums ergibt sich dann, wieviel Rechenzeit während des Messzeitraums von dem Messprozess verbraucht wurde. Hierzu wird die Anzahl der Wiederholungen des Messprozesses vorzugsweise mit der vorgegebenen Rechenzeit des Messprozesses multipliziert. Dieser Wert entspricht der Rechenzeit, die für Prozesse mit der Priorität des Messprozesses verfügbar ist.

Weiterhin lässt sich aus diesem Wert ableiten, wieviel Rechenzeit von Prozessen mit einer höheren Priorität verbraucht wird. Falls ein MessProzess mit einem vorgegebenen Prioritätswert n-1=10 beispielsweise 20% der verfügbaren Rechenzeit erhält, so bedeutet dies, dass die Prozesse mit höheren Prioritäten n≥10 80% der verfügbaren Rechenzeit verbrauchen.

Vorzugsweise ersetzt der MessProzess während der Messung mindestens einen Prozess mit einer niedrigeren Priorität. In der bevorzugten Ausführungsform der Erfindung ersetzt der MessProzess jedoch sämtliche Prozesse mit einer niedrigeren Priorität ersetzt.

Es ist jedoch auch möglich, dass die Prozesse mit einer niedrigeren Priorität als der MessProzess während des Messzeitraums lediglich suspendiert werden.

In der bevorzugten Ausführungsform der Erfindung ist der Messzeitraum wesentlich größer als die Rechenzeit des Messprozesses, damit die gemessene Anzahl der Ausführungen des Messprozesses möglichst unverfälscht ist. Beispielsweise kann der Messzeitraum 100 ms umfassen, jedoch sind auch größere oder kleinere Werte für den Messzeitraum möglich.

Weiterhin ist vorzugsweise vorgesehen, dass die Bestimmung der prioritätsabhängigen Rechenzeitverteilung während des Betriebs des MehrProzess-Rechensystems wiederholt durchgeführt wird, um Änderungen zu erfassen, die beispielsweise durch eine zwischenzeitliche Änderung der von den Prozessen benötigten Rechenzeit verursacht werden. So führt beispielsweise die Verlängerung der von einem Prozess benötigten Rechenzeit zu einer Änderung der prioritätsabhängigen Rechenzeitverteilung. Vorzugsweise erfolgt die Bestimmung der prioritätsabhängigen Rechenzeitverteilung deshalb regelmäßig in vorgegebenen Messintervallen, die beispielsweise 500 ms lang sein können.

Es ist jedoch zu erwähnen, dass die erfindungsgemäße Bestimmung der prioritätsabhängigen Rechenzeitverteilung selbst Rechenzeit verbraucht. Bei einem Messintervall von 500 ms und einem Messzeitraum von 100 ms wird für die Durchführung des erfindungsgemäßen Verfahrens beispielsweise 20% der Rechenzeit benötigt, die für Prozesse unterhalb der Priorität des Messprozesses verfügbar ist.

In einer Variante der Erfindung ist deshalb vorgesehen, das Messintervall, den Messzeitraum und/oder die Rechenzeit des Messprozesses in Abhängigkeit von anderen Größen einzustellen. Hierzu wird vorzugsweise die Rechenbelastung des MehrProzess-Rechensystems bestimmt und das Messintervall, der Messzeitraum und/oder die Rechenzeit des Messprozesses entsprechend angepasst.

Die erfindungsgemäße Bestimmung der prioritätsabhängigen Rechenzeitverteilung setzt voraus, dass die Rechenzeit des Messprozesses bekannt ist. Als Messprozess wird deshalb vorzugsweise ein Prozess verwendet, der eine vorgegebene, bekannte Rechenzeit aufweist.

Es ist jedoch alternativ auch möglich, einen Prozess als MessProzess zu verwenden, dessen Rechenzeit zunächst nicht bekannt ist und deshalb im Rahmen des erfindungsgemäßen Verfahrens bestimmt wird. Diese Bestimmung der Rechenzeit des als MessProzess verwendeten Prozesses kann beispielsweise vor dem eigentlichen Verfahren in einem Kalibrierungsverfahren erfolgen. Hierzu wird der MessProzess aktiviert, wobei Anfangszeitpunkt und Endzeitpunkt des Messprozesses gemessen wird, um daraus die Rechenzeit des Messprozesse zu ermitteln.

Die Rechenzeit des als MessProzess verwendeten Prozesses kann jedoch alternativ auch "On-Line" während des eigentlichen Verfahrens erfolgen, indem beispielsweise bei einer Ausführung des Messprozesses der Anfangszeitpunkt und der Endzeitpunkt des Messprozesses gemessen wird.

Schließlich kann die Rechenzeit des Messprozesses auch nach Ende des Messzeitraums, aber vor der Bestimmung der prioritätsabhängigen Rechenzeitverteilung erfolgen.

Die Erfindung ist sowohl mit preemptiven als auch mit nicht-preemptiven (kooperativen) Prozessverwaltungsverfahren verwendbar, die für den Fachmann bekannt sind und deshalb nicht weiter beschrieben werden müssen. Darüber hinaus lassen sich im Rahmen der Erfindung auch Mischformen preemptiver und nicht-preemptiver Prozessverwaltungsverfahren einsetzen.

Weiterhin kann die Erfindung wahlweise mit statischen oder dynamischen Prozessverwaltungsverfahren verwendet werden, wobei beliebige Kombinationen von preemptiven und nicht-preemptiven Prozessverwaltungsverfahren mit statischen und dynamischen Prozessverwaltungsverfahren möglich sind.

Ferner ist der im Rahmen der Erfindung verwendete Begriff eines Prozesses allgemein zu verstehen und umfasst beispielsweise auch Tasks, Threads und Programmmodule.

Andere vorteilhafte Weiterbildungen der Erfindung sind in den Unteransprüchen beschrieben oder werden nachstehend zusammen mit der Beschreibung des bevorzugten Ausführungsbeispiels der Erfindung anhand der Figuren näher erläutert. Es zeigen:

Figur 1     das erfindungsgemäße Verfahren als Flussdiagramm,

Figur 2     eine Variante des erfindungsgemäßen Verfahrens in Form eines Flussdiagramms sowie

Figur 3     ein Zeitdiagramm zur Verdeutlichung des erfindungsgemäßen Verfahrens.

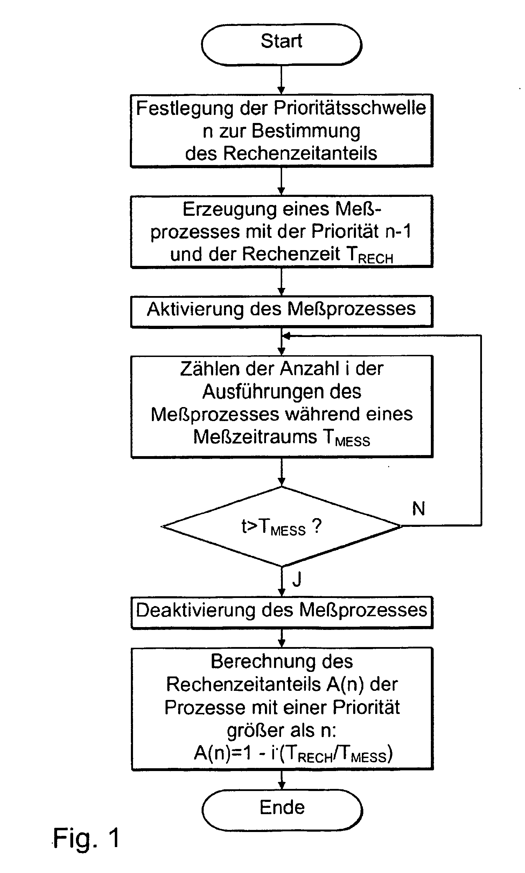

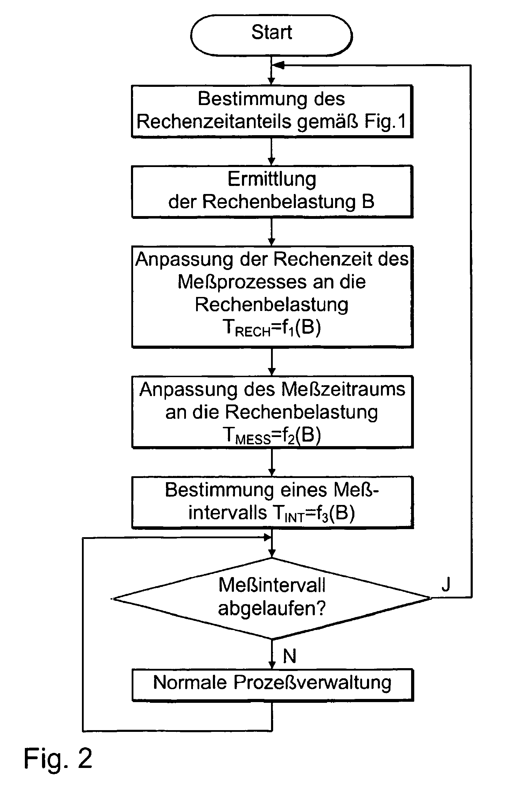

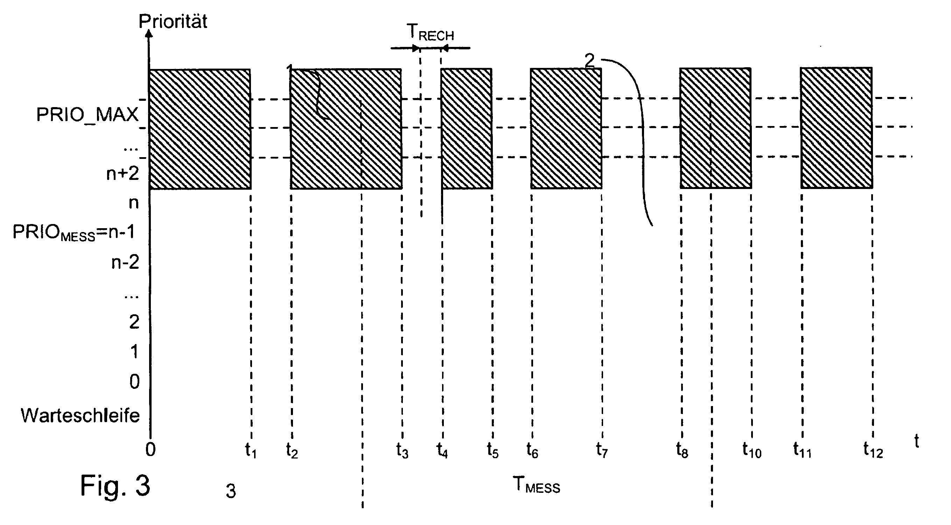

Das in Figur 1 dargestellte Flussdiagramm ermöglicht die Bestimmung des Rechenzeitanteils, der in einem MehrProzess-Rechensystem von Prozessen 1 verbraucht wird, deren Priorität größer oder gleich einer Prioritätsschwelle n ist, wie schematisch in dem Zeitdiagramm in Figur 3 dargestellt ist.

Hierzu wird in einem ersten Schritt zunächst die Prioritätsschwelle n vorgegeben, wobei die Prioritätsschwelle n frei wählbar ist, um die Rechenzeitverteilung prioritätsabhängig für verschiedene Prioritäten bestimmen zu können.

Anschließend wird dann ein MessProzess 2 erzeugt, dessen Priorität $PRIO_{MESS}$=n-1 ist. Dies bedeutet, dass alle Prozesse Vorrang vor dem MessProzess 2 haben, deren Priorität größer oder gleich der Prioritätsschwelle n ist. Der MessProzess 2 weist hierbei eine vorgegebene Rechenzeit $T_{RECH}$ auf, um die von dem MessProzess 2 verbrauchte Rechenzeit in einfacher Weise bestimmen zu können. Darüber hinaus ist der MessProzess 2 nach seiner Ausführung sofort wieder für eine erneute Ausführung bereit, so dass der MessProzess 2 automatisch wiederholt wird, falls kein anderer Prozess mit einer höheren Priorität vorhanden ist.

In einem nächsten Schritt wird dann der MessProzess 2 aktiviert, so dass der MessProzess sämtliche Prozesse ersetzt, die eine geringere Priorität aufweisen.

Während eines vorgegebenen Messzeitraums $T_{MESS}$ wird dann in einer Schleife die Anzahl i der Ausführungen des Messprozesses 2 innerhalb des Messzeitraums $T_{MESS}$ ermittelt, wobei am Ende der Schleife laufend überprüft wird, ob der Messzeitraum $T_{MESS}$ abgelaufen ist.

Nach Ablauf des Messzeitraums $T_{MESS}$ wird dann der MessProzess deaktiviert.

Schließlich wird dann aus der gemessenen Anzahl i der Ausführungen des Messprozesses 2 während des Messzeitraums $T_{MESS}$, dem Messzeitraum $T_{MESS}$ und der vorgegebenen Rechenzeit $T_{RECH}$ des Messprozesses 2 nach folgender Formel der Rechenzeitanteil A der Prozesse 1 berechnet, deren Priorität größer oder gleich der Prioritätsschwelle n ist:

$$A(n) = 1 - i(n) \cdot \frac{T_{RECH}}{T_{MESS}}$$

Figur 2 zeigt eine Variante des vorstehend beschriebenen erfindungsgemäßen Verfahrens, bei dem die Messung des auf Prozesse mit einer Priorität größer oder gleich n entfallenden Rechenzeitanteils A laufend in einer Schleife wiederholt wird.

Darüber hinaus wird in der Schleife laufend die Rechenbelastung B des MehrProzess-Rechensystems ermittelt, um die Messung an die Rechenbelastung B anzupassen.

Hierzu wird in der Schleife die Rechenzeit $T_{RECH}$ des Messprozesses als Funktion der Rechenbelastung B festgelegt.

Weiterhin wird auch der Messzeitraum $T_{MESS}$ als Funktion der Rechenbelastung B bestimmt.

Schließlich wird in der Schleife ein Messintervall $T_{INT}$ als Funktion der Rechenbelastung B bestimmt, wobei das Messintervall $T_{INT}$ angibt, in welchen Zeitabständen das erfindungsgemäße Messverfahren gemäß Figur 1 durchgeführt wird.

Nach Ablauf des Messintervall $T_{INT}$ wird die Schleife dann erneut durchlaufen, wobei jeweils der Rechenzeitanteil A gemäß Figur 1 bestimmt wird.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

**Patentansprüche**

1.  Verfahren zur Ermittlung der prioritätsabhängigen Rechenzeitverteilung in einem prioritätsgesteuerten Mehrprozess-Rechensystem, mit den folgenden Schritten:

    a) Erzeugung eines separaten Messprozesses (2) mit einer vorgegebenen Rechenzeit ($T_{RECH}$) und einer vorgegebenen Priorität ($PRIO_{MESS}$), wobei die Priorität des Messprozesses frei wählbar ist,
    b) Wiederholte Ausführung des Messprozesses (2) während eines vorgegebenen Messzeitraums ($T_{MBSS}$),
    c) Ermittlung der Anzahl der Ausführungen des Messprozesses (2) innerhalb des Messzeitraums ($T_{MESS}$),
    d) Bestimmung der prioritätsabhängigen Rechenzeitverteilung in Abhängigkeit von der Anzahl der Ausführungen des Messprozesses (2) während des Messzeitraums ($T_{MESS}$) und der vorgegebenen Rechenzeit ($T_{RECH}$) des Messprozesses (2).

2. Verfahren nach Anspruch 1,
**dadurch gekennzeichnet,**
**dass** während des Messzeitraums ($T_{MESS}$) mindestens ein Prozess durch den Messprozess (2) ersetzt oder angehalten wird, dessen Priorität kleiner als die Priorität des Messprozesses (2) ist.

3. Verfahren nach Anspruch 1 und/oder 2,
**dadurch gekennzeichnet,**
**dass** während des Messzeitraums ($T_{MESS}$) alle Prozesse durch den Messprozess (2) ersetzt oder angehalten werden, deren Priorität kleiner als die vorgegebene Priorität des Messprozesses (2) ist.

4. Verfahren nach mindestens einem der vorhergehenden Ansprüche,
**dadurch gekennzeichnet,**
**dass** die Anzahl (i) der Wiederholungen des Messprozesses (2) während des Messzeitraums ($T_{MESS}$) mit der vorgegebenen Rechenzeit ($T_{RECH}$) des Messprozesses (2) multipliziert wird, um die während des Messzeitraums ($T_{MESS}$) für einen Prozess mit der vorgegebenen Priorität verfügbare Rechenzeit zu ermitteln.

5. Verfahren nach mindestens einem der vorhergehenden Ansprüche,
**dadurch gekennzeichnet,**
**dass** der Messzeitraum ($T_{MESS}$) größer als die Rechenzeit ($T_{RECH}$) des Messprozesses (2) ist.

6. Verfahren nach mindestens einem der vorhergehenden Ansprüche,
**gekennzeichnet durch** mindestens eine Wiederholung mit einem vorgegebenen Messintervall ($T_{INT}$).

7. Verfahren nach Anspruch 6,
**dadurch gekennzeichnet,**
**dass** das Messintervall ($T_{INT}$) größer als der Messzeitraum ($T_{MESS}$) ist.

8. Verfahren nach mindestens einem der vorhergehenden Ansprüche,
**dadurch gekennzeichnet,**
**dass** das Messintervall ($T_{INT}$) und/oder die Rechenzeit ($T_{RECH}$) des Messprozesses (2) und/oder der Messzeitraum ($T_{MESS}$) verändert wird.

9. Verfahren nach Anspruch 8,
**dadurch gekennzeichnet,**
**dass** die Rechenbelastung (B) des MehrProzess-Rechensystems ermittelt und das Messintervall ($T_{INT}$) und/oder die Rechenzeit ($T_{RECH}$) des Messprozesses (2) und/oder der Messzeitraum ($T_{MESS}$) in Abhängigkeit von der Rechenbelastung (B) angepasst wird.

10. Verfahren nach mindestens einem der vorhergehenden Ansprüche,
**gekennzeichnet durch**
eine statische oder dynamische Prozessverwaltung.

11. Verfahren nach mindestens einem der vorhergehenden Ansprüche,
**gekennzeichnet durch**
eine preemptive oder nicht-preemptive oder gemischt preemptive Prozessverwaltung.

12. Verfahren nach mindestens einem der vorhergehenden Ansprüche,
**dadurch gekennzeichnet,**
**dass** die Prozessverwaltung jedem Prozess eine feste Priorität zuordnet.

13. Verfahren nach mindestens einem der vorhergehenden Ansprüche,
**dadurch gekennzeichnet,**
**dass** die Rechenzeit ($T_{RECH}$) des Messprozesses (2) vor der Erzeugung und/oder vor der Aktivierung des Messprozesses (2) ermittelt wird.

14. Verfahren nach mindestens einem der Ansprüche 1 bis 12,
**dadurch gekennzeichnet,**
**dass** die Rechenzeit ($T_{RECH}$) des Messprozesses (2) während der Ausführung des Messprozesses (2) ermittelt wird.

15. Verfahren nach mindestens einem der Ansprüche 1 bis 12,
**dadurch gekennzeichnet,**
**dass** die Rechenzeit ($T_{RECH}$) des Messprozesses (2) nach dem Ende des Messzeitraums ($T_{MESS}$) und vor der Bestimmung der prioritätsabhängigen Rechenzeitverteilung ermittelt wird.

**Claims**

1. Method for determining priority-dependent computing-time distribution in a priority-controlled multiprocess computing system, having the following steps:

a) generating a separate measuring process (2) which has a preset computing time ($T_{RECH}$) and a preset priority ($PRIO_{MESS}$), wherein the priority of the measuring process is freely selectable,
b) repeatedly executing the measuring process (2) during a preset measuring period ($T_{MESS}$),
c) determining the number of executions of the measuring process (2) within the measuring period ($T_{MESS}$),
d) specifying the priority-dependent computing-time distribution depending on the number of executions of the measuring process (2) during the measuring period ($T_{MESS}$) and the preset computing time ($T_{RECH}$) of the measuring process (2).

2. Method according to Claim 1,
**characterised in that**
at least one process whose priority is lower than the priority of the measuring process (2) is replaced or stopped by the measuring process (2) during the measuring period ($T_{MESS}$).

3. Method according to Claim 1 and/or 2,
**characterised in that**
all processes whose priority is lower than the preset priority of the measuring process (2) are replaced or stopped by the measuring process (2) during the measuring period ($T_{MESS}$).

4. Method according to at least one of the preceding claims,
**characterised in that**
the number (i) of repetitions of the measuring process (2) during the measuring period ($T_{MESS}$) is multiplied by the preset computing time ($T_{RECH}$) of the measuring process (2), in order to determine the computing time which is available during the measuring period ($T_{MESS}$) for a process having the preset priority.

5. Method according to at least one of the preceding claims,
**characterised in that**
the measuring period ($T_{MESS}$) is greater than the computing time ($T_{RECH}$) of the measuring process (2).

6. Method according to at least one of the preceding claims,
**characterised by**
at least one repetition with a preset measuring interval ($T_{INT}$).

7. Method according to Claim 6,
**characterised in that**
the measuring interval ($T_{INT}$) is greater than the measuring period ($T_{MESS}$).

8. Method according to at least one of the preceding claims,
**characterised in that**
the measuring interval ($T_{INT}$) and/or the computing time ($T_{RECH}$) of the measuring process (2) and/or the measuring period ($T_{MESS}$) is changed.

9. Method according to Claim 8,
**characterised in that**

the computing load (B) of the multiprocess computing system is determined, and the measuring interval ($T_{INT}$) and/or the computing time ($T_{RECH}$) of the measuring process (2) and/or the measuring period ($T_{MESS}$) is adapted depending on the computing load (B).

10. Method according to at least one of the preceding claims,
**characterised by**
a static or dynamic process management.

11. Method according to at least one of the preceding claims,
**characterised by**
a pre-emptive or non-pre-emptive or hybrid pre-emptive process management.

12. Method according to at least one of the preceding claims,
**characterised in that**
the process management assigns a fixed priority to each process.

13. Method according to at least one of the preceding claims,
**characterised in that**
the computing time ($T_{RECH}$) of the measuring process (2) is determined before the generation and/or before the activation of the measuring process (2).

14. Method according to at least one of the Claims 1 to 12,
**characterised in that**
the computing time ($T_{RECH}$) of the measuring process (2) is determined during the execution of the measuring process (2).

15. Method according to at least one of the Claims 1 to 12,
**characterised in that**
the computing time ($T_{RECH}$) of the measuring process (2) is determined after the end of the measuring period ($T_{MESS}$) and before the specification of the priority-dependent computing-time distribution.

**Revendications**

1. Procédé pour déterminer la répartition du temps de calcul en fonction de la priorité dans un système de calcul multitâche à contrôle par priorité, présentant les étapes suivantes :

a) génération d'une tâche de mesure séparée (2) avec un temps de calcul ($T_{CALCUL}$) prédéfini et une priorité ($PRIO_{MESURE}$) prédéfinie, la priorité de la tâche de mesure pouvant être choisie librement,

b) exécution répétée de la tâche de mesure (2) pendant un laps de temps de mesure ($T_{MESURE}$) prédéfini,

c) détermination du nombre d'exécutions de la tâche de mesure (2) dans un laps de temps de mesure ($T_{MESURE}$), et

d) détermination de la répartition du temps de calcul en fonction de la priorité par rapport au nombre d'exécutions de la tâche de mesure (2) pendant le laps de temps de mesure ($T_{MESUPE}$) et le temps de calcul ($T_{CALCUL}$) prédéfini de la tâche de mesure (2).

2. Procédé selon la revendication 1,
**caractérisé en ce que**,
pendant le laps de temps de mesure ($T_{MESURE}$), au moins une tâche dont la priorité est inférieure à la priorité de la tâche de mesure (2) est remplacée par la tâche de mesure (2) ou suspendue.

3. Procédé selon les revendications 1 et/ou 2,
**caractérisé en ce que**,
pendant le laps de temps de mesure ($T_{MESURE}$), toutes les tâches dont la priorité est inférieure à la priorité prédéfinie de la tâche de mesure (2) sont remplacées par la tâche de mesure (2) ou suspendues.

4. Procédé selon au moins l'une des revendications précédentes,
**caractérisé en ce que**
le nombre (i) des répétitions de la tâche de mesure (2) pendant le laps de temps de mesure ($T_{MESURE}$) est multiplié par le temps de calcul prédéfini ($T_{CALCUL}$) de la tâche de mesure (2) pour déterminer le temps de calcul disponible pendant le laps de temps de mesure ($T_{MESURE}$) pour une tâche dotée de la priorité prédéfinie.

5. Procédé selon au moins l'une des revendications précédentes,
**caractérisé en ce que**
le laps de temps de mesure ($T_{MESUPE}$) est supérieur au temps de calcul ($T_{CALCUL}$) de la tâche de mesure (2).

6. Procédé selon au moins l'une des revendications précédentes,
**caractérisé par**
au moins une répétition avec un intervalle de mesure prédéfini ($T_{INT}$).

7. Procédé selon la revendication 6,
**caractérisé en ce que**
l'intervalle de mesure prédéfini ($T_{INT}$) est supérieur au laps de temps de mesure ($T_{MESURE}$).

8. Procédé selon au moins l'une des revendications précédentes,
**caractérisé en ce que**
l'intervalle de mesure ($T_{INT}$) et/ou le temps de calcul ($T_{CALCUL}$) de la tâche de mesure (2) et/ou le laps de temps de mesure ($T_{MESURE}$) varient.

9. Procédé selon la revendication 8,
**caractérisé en ce que**
la charge de calcul (B) du système de calcul multitâche est déterminée et que l'intervalle de mesure ($T_{INT}$) et/ou le temps de calcul ($T_{CALCUL}$) de la tâche de mesure (2) et/ou le laps de temps de mesure ($T_{MESURE}$) est/sont adapté(s) en fonction de la charge de calcul (B).

10. Procédé selon au moins l'une des revendications précédentes,
**caractérisé par**
une gestion des tâches statique ou dynamique.

11. Procédé selon au moins l'une des revendications précédentes,
**caractérisé par**
une gestion des tâches préemptive, non préemptive ou préemptive mixte.

12. Procédé selon au moins l'une des revendications précédentes,
**caractérisé en ce que**
le système de gestion des tâches attribue une priorité fixe à chaque tâche.

13. Procédé selon au moins l'une des revendications précédentes,
**caractérisé en ce que**
le temps de calcul ($T_{CALCUL}$) de la tâche de mesure (2) est déterminé avant la génération et/ou avant l'activation de la tâche de mesure (2).

14. Procédé selon au moins l'une des revendications 1 à 12,
**caractérisé en ce que**
le temps de calcul ($T_{CALCUL}$) de la tâche de mesure (2) est déterminé pendant l'exécution de la tâche de mesure (2).

15. Procédé selon au moins l'une des revendications 1 à 12,
**caractérisé en ce que**
le temps de calcul ($T_{CALCUL}$) de la tâche de mesure (2) est déterminé après la fin du laps de temps de mesure ($T_{MESURE}$) et avant la détermination de la répartition du temps de calcul en fonction de la priorité.

Start

Festlegung der Prioritätsschwelle n zur Bestimmung des Rechenzeitanteils

Erzeugung eines Meß-prozesses mit der Priorität n-1 und der Rechenzeit $T_{RECH}$

Aktivierung des Meßprozesses

Zählen der Anzahl i der Ausführungen des Meßprozesses während eines Meßzeitraums $T_{MESS}$

$t > T_{MESS}$ ?

N

J

Deaktivierung des Meßprozesses

Berechnung des Rechenzeitanteils A(n) der Prozesse mit einer Priorität größer als n: $A(n) = 1 - i \cdot (T_{RECH}/T_{MESS})$

Ende

Fig. 1

```
                    ┌─────────────┐
                    │    Start    │
                    └──────┬──────┘
                           │          ◄──────────────────┐
              ┌────────────▼────────────┐                │
              │    Bestimmung des       │                │
              │  Rechenzeitanteils      │                │
              │     gemäß Fig.1         │                │
              └────────────┬────────────┘                │
              ┌────────────▼────────────┐                │
              │      Ermittlung         │                │
              │  der Rechenbelastung B  │                │
              └────────────┬────────────┘                │
      ┌────────────────────▼────────────────────┐        │
      │   Anpassung der Rechenzeit des           │        │
      │      Meßprozesses an die                 │        │
      │         Rechenbelastung                  │        │
      │        T_RECH = f_1(B)                   │        │
      └────────────────────┬────────────────────┘        │
      ┌────────────────────▼────────────────────┐        │
      │   Anpassung des Meßzeitraums             │        │
      │     an die Rechenbelastung               │        │
      │        T_MESS = f_2(B)                   │        │
      └────────────────────┬────────────────────┘        │
         ┌─────────────────▼─────────────────┐            │
         │   Bestimmung eines Meß-           │            │
         │   intervalls T_INT = f_3(B)       │            │
         └─────────────────┬─────────────────┘            │
   ┌──────────────►────────▼────◄─────────────────────┐   │
   │                  ◇─────────────◇                  │   │
   │               ◇   Meßintervall    ◇  J            │   │
   │               ◇   abgelaufen?     ◇──────────────────┘
   │                  ◇─────────────◇                  │
   │                         │ N                       │
   │              ┌──────────▼──────────┐              │
   │              │ Normale Prozeß-     │              │
   │              │    verwaltung       │              │
   │              └──────────┬──────────┘              │
   └─────────────────────────┘
```

$T_{RECH} = f_1(B)$

$T_{MESS} = f_2(B)$

$T_{INT} = f_3(B)$

## Fig. 2

Priorität

PRIO_MAX

... n+2

n

PRIO_MESS=n-1

n-2

... 2

1

0

Warteschleife

$T_{RECH}$

$T_{MESS}$

$t_1$ $t_2$ $t_3$ $t_4$ $t_5$ $t_6$ $t_7$ $t_8$ $t_{10}$ $t_{11}$ $t_{12}$ $t$

Fig. 3